# EUROPEAN PATENT APPLICATION

(11) **EP 3 339 150 A1**
(43) Date of publication of application: **27.06.2018**
(21) Application number: 17173967.5
(22) Date of filing: 01.06.2017
(51) Int. Cl.: B62J 15/02

(54) **MAGNETIC COUPLING DEVICE**

(30) Priority: 22.12.2016 TW 105142624
(71) Applicant: Sunny Wheel Industrial Co., Ltd., Chang Hua Hsien 50442 (TW)
(72) Inventor: Hsu, Kuo-Chung, 50442 Chang Hua Hsien (TW)
(74) Representative: Zimmermann, Tankred Klaus

(57) **Abstract**

A magnetic coupling device includes first and second seat units, a first magnetic unit (30), and a releasing member (50). The first seat unit (10) is adapted to be connected to a frame of a vehicle. The second seat unit (20) is adapted to be connected to a mudguard (1). The fist magnetic unit includes a first member (31) disposed in the first seat unit, and a second member (32) disposed in the second seat unit. The releasingmember (50) is connected between the first and the second seat units, and is operable between a linked state, where the second seat unit is coupled to the first seat unit with the second member (32) being magnetically connected to the first member, and a released state, where the second seat unit is away from the first seat unit with the second member (32) being separated from the first member (31).

## Description

The disclosure relates to a coupling device, and more particularly to a magnetic coupling device adapted to couple a mudguard to a front fork of a bicycle.

A bicycle mudguard is generally coupled to a front fork of the bicycle through a coupling device. During cycling, clothing of a cyclist may be caught between the front fork and the mudguard and may cause serious injury to the cyclist. In order to prevent such danger, the coupling device is designed to be separable into parts for safety release of the mudguard from the front fork.

U.S. Patent No. 6331011B1 discloses a conventional coupling device, which includes an expansion element connected to a bottom tubular portion of the front fork, and a sliding element connected to the expansion element and formed with two grooves. The mudguard has two rail portions removably engaging the grooves of the sliding element.

European Patent No. 1795441B1 discloses another conventional coupling device, which includes a connecting seat and a rotatable fastening member. The connecting seat is adapted to be connected to the mudguard, and has a plurality of fastening holes. The fastening member has a plurality of fastening portions disposed at a bottom portion thereof. Each of the fastening portions movably engages an engaging portion of a respective one of the fastening holes. The fastening member is rotatable relative to the connecting seat to disengage the fastening portions from the engaging portions, so as to separate the mudguard from the front fork.

However, after the separation of the abovementioned conventional coupling devices when removing the mudguard from the front fork, a user needs to precisely align the separated parts to reassemble the conventional coupling devices so as to couple once again the mudguard and the front fork together, thereby causing inconvenience during use.

Therefore, an object of the disclosure is to provide a magnetic coupling device that can alleviate at least one of the drawbacks associated with the abovementioned prior art.

Accordingly, the magnetic coupling device is adapted to couple a mudguard to a frame of a vehicle. The magnetic coupling device includes a first seat unit, a second seat unit, a first magnetic unit, and a releasing member. The first seat unit is adapted to be connected to the frame. The second seat unit is adapted to be connected to the mudguard. The first magnetic unit includes a first member disposed in the first seat unit, and a second member disposed in the second seat unit. The releasing member is connected between the first seat unit and the second seat unit, and is operable between a linked state, where the second seat unit is coupled to the first seat unit with the second member being magnetically connected to the first member, and a released state, where the second seat unit is away from the first seat unit with the second member being separated from the first member.

Other features and advantages of the disclosure will become apparent in the following detailed description of the embodiment with reference to the accompanying drawings, of which:
Figure 1 is a perspective view of a first embodiment of a magnetic coupling device according to the present disclosure being adapted to couple a mudguard to a front fork of a bicycle;
Figure 2 is an assembled perspective view of the first embodiment;
Figure 3 is an exploded perspective view of the first embodiment;
Figure 4 is another exploded perspective view of the first embodiment;
Figure 5 is a sectional view of the first embodiment, illustrating a releasing member of the magnetic coupling device being in a linked state;
Figure 6 is a view similar to Figure 5, but illustrating the releasing member being in a released state; and
Figure 7 is a perspective view of a second embodiment of a mudguard coupling device according to the present disclosure being adapted to couple the mudguard to the front fork;
Figure 8 is an assembled perspective view of the second embodiment;
Figure 9 is an exploded perspective view of the second embodiment;
Figure 10 is another exploded perspective view of the second embodiment;
Figure 11 is a sectional view of the second embodiment, illustrating the releasing member being in the linked state; and
Figure 12 is a view similar to Figure 11, but illustrating the releasing member being in the released state.

Before the disclosure is described in greater detail, it should be noted that where considered appropriate, reference numerals or terminal portions of reference numerals have been repeated among the figures to indicate corresponding or analogous elements, which may optionally have similar characteristics.

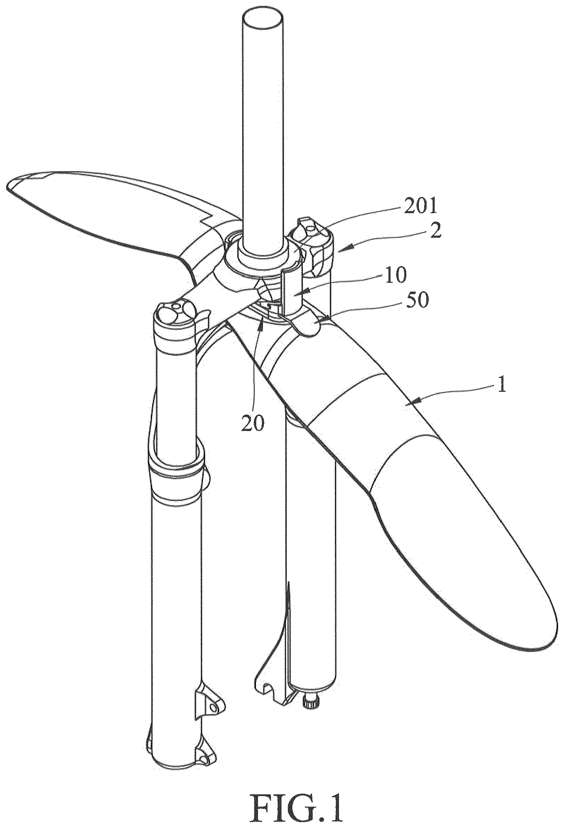

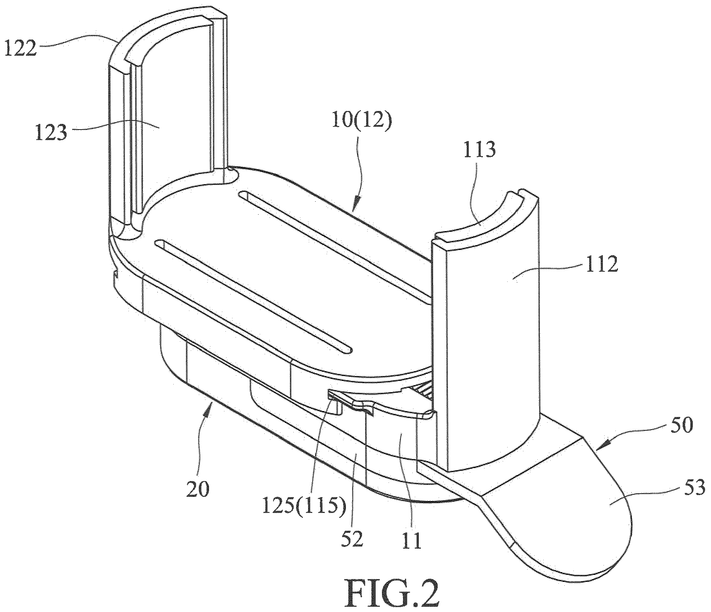

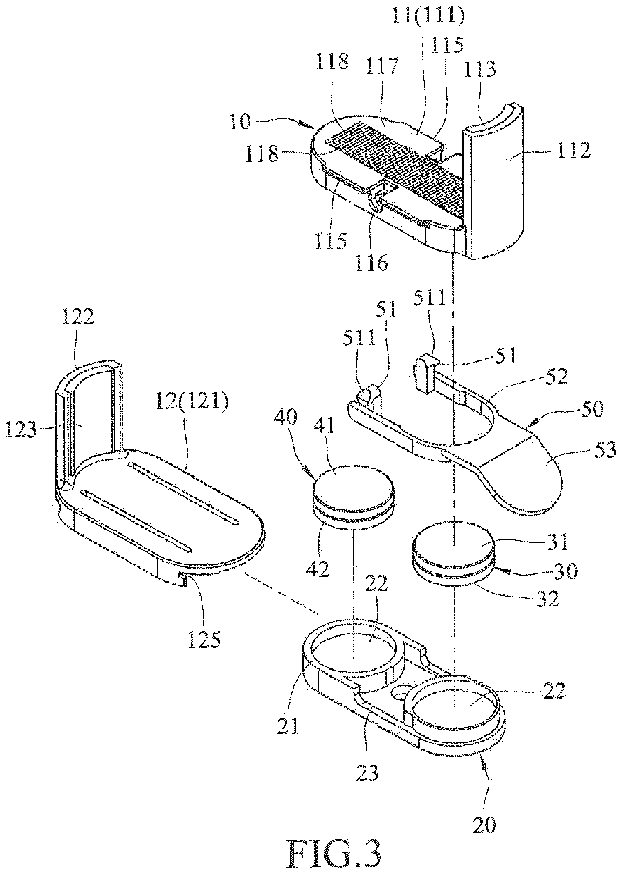

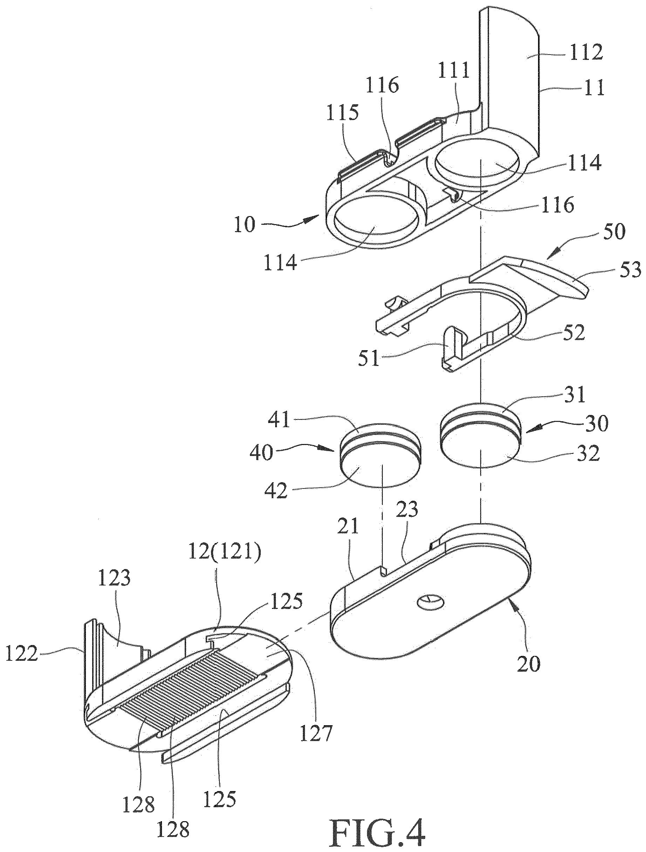

Referring to Figures 1 to 4, a first embodiment of a magnetic coupling device according to the present disclosure is adapted to couple a mudguard 1 to a front fork 2 of a frame of a vehicle. In this embodiment, the front fork 2 is not formed with any fastening hole or opening, and may be made of carbon fiber.

The magnetic coupling device includes a first seat unit 10 adapted to be connected to the front fork 2, a second seat unit 20 adapted to be connected to the mudguard 2, a first magnetic unit 30, a second magnetic unit 40, and a releasing member 50.

In this embodiment, the first seat unit 10 includes a first seat 11 and a second seat 12. The first seat 11 has a first base plate 111, a first clamp plate 112, a first adhesive layer 113, and two guide rails 115. The first base plate 111 is formed with two upper holes 114 and two pivot holes 116 disposed between the upper holes 114, and has a first end surface 117 opposite to the upper holes 114, and a plurality of first non-slip strips 118 disposed on the first end surface 117. The first clamp plate 112 is connected to the first base plate 111, and cooperates with the first base plate 111 to form an L-shaped structure. The first adhesive layer 113 is fixedly attached to an inner surface of the first clamp plate 112. The guide rails 115 are respectively connected to opposite ends of the first base plate 111, and flank the upper holes 114. In this embodiment, the pivot holes 116 are formed respectively in the guide rails 115.

The second seat 12 has a second base plate 121, a second clamp plate 122, a second adhesive layer 123, and two guide grooves 125. The second clamp plate 122 is connected to the second base plate 121, and cooperates with the second base plate 121 to form an L-shaped structure. The second adhesive layer 123 is fixedly attached to an inner surface of the second clamp plate 122. The guide grooves 125 are formed in the second base plate 121, and are respectively engaged with the guide rails 115, such that the first seat 11 is slidable relative to the second seat 12. The second base plate 121 has a second end surface 127 facing the first end surface 117, and a plurality of second non-slip strips 128 disposed on the second end surface 127, and engaging the first non-slip strips 118 for securing the first seat 11 at a desired position relative to the second seat 12 after sliding movement of the first seat 11 relative to the second seat 12.

The second seat 20 has a top surface 21, two lower holes 22 formed in the top surface 21, and a connecting groove 23 formed in the top surface 21 and being U-shaped.

The first magnetic unit 30 includes a first member 31 and a second member 32. The second magnetic unit 40 includes a third member 41 and a fourth member 42. In this embodiment, the first, second, third and fourth members 31, 32, 41, 42 are magnets.

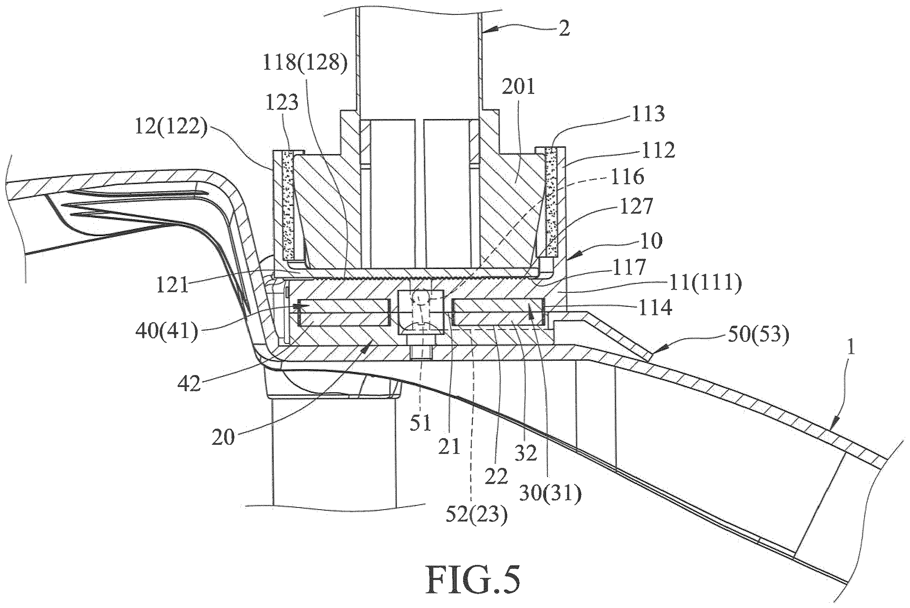

Referring further to Figure 5, the upper holes 114 of the first base plate 111 respectively retain the first member 31 of the first magnetic unit 30 and the third member 41 of the second magnetic unit 40 therein. The lower holes 22 of the second seat unit 20 respectively retain the second member 32 of the first magnetic unit 30 and the fourth member 42 of the second magnetic unit 40 therein.

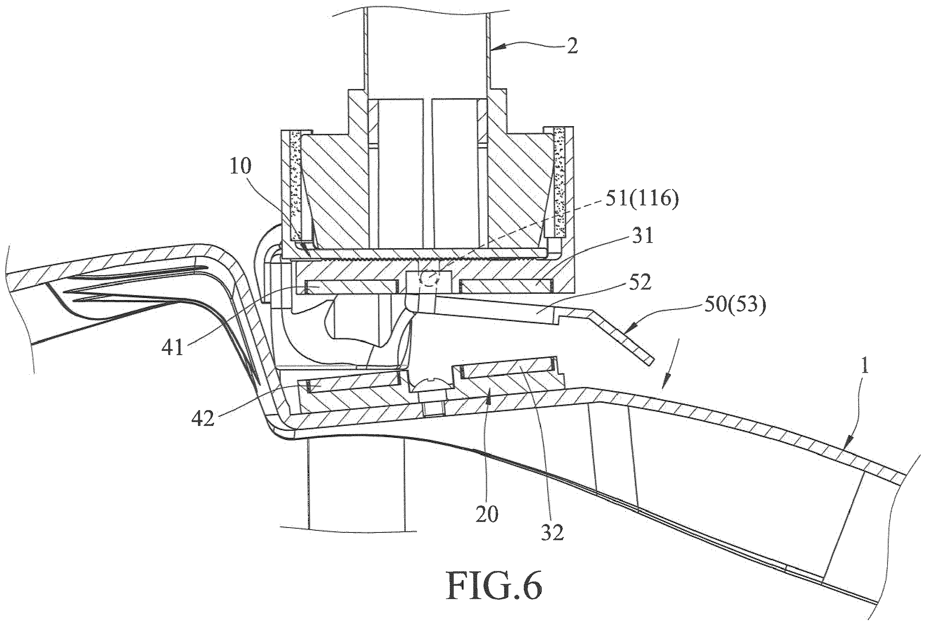

The releasing member 50 is connected between the first seat unit 10 and the second seat unit 20, and is operable between a linked state (see Figure 5) and a released state (see Figure 6). In this embodiment, the releasing member 50 is pivotally connected to the first seat 11 of the first seat unit 10. The releasing member 50 has two pivot rods 51 respectively and rotatably engaging the pivot holes 116 of the first seat 11, a connecting portion 52 being U-shaped and interconnecting the pivot rods 51, and a handle portion 53 connected to the connecting portion 52 and projecting outwardly of the first and second seat units 10, 20. Each of the pivot rods 51 has a chamfered end portion 511 for facilitating insertion of the pivot rods 51 into the pivot holes 116 when assembling the releasing member 50 and the first seat 11 together.

Referring to Figures 1, 2 and 5, when the magnetic coupling device is installed and couples the mudguard 1 to the front fork 2, the first seat unit 10 is connected to the front fork 2 (via a proper adjustment of relative positions of the first and second seats 11, 12 to fit the size of the front fork 2) with the first and second adhesive layers 113, 123 being connected to a shoulder portion 201 of the front fork 2. At this time, the releasing member 50 is in the linked state where the second seat unit 20 is coupled to the first seat unit 10 with the second member 32 being magnetically connected to the first member 31 and with the fourth member 42 being magnetically connected to the third member 41, and the connecting portion 52 of the releasing member 50 is clamped between the first seat 11 and the second seat unit 20.

Referring to Figure 6, when intending to separate the mudguard 1 from the front fork 2, a user only needs to push the handle portion 53 of the releasing member 50 to cause the pivot rods 51 to rotate respectively in the pivot holes 116 of the first seat 11, thereby resulting in a pivot action of the connecting portion 52 relative to the first seat 11 to convert the releasing member 50 from the linked state to the released state, where the second seat unit 20 is away from the first seat unit 10 with the second member 32 being separated from the first member 31, and the fourth member 42 being separated from the third member 41 (i.e., the second seat 20 is pushed away from the first seat unit 10 against the magnetic attraction between the first and second members 31, 32 and between the third and fourth members 41, 42), thereby separating the mudguard 1 from the front fork 2.

To reassemble the mudguard 1 to the front fork 2, the user only needs to move the second seat unit 20 toward the first seat unit 10, and the magnetic attraction between the first and second members 31, 32 and between the third and fourth members 41, 42 will automatically couple the first and second seat units 10, 20 together with the releasing member 50 being automatically pivoted back to the linked state.

As a result, by virtue of the first and second magnetic units 30, 40, the mudguard 1 can be easily coupled to the front fork 2. The pivot action of the releasing member 50 from the linked state to the released state drives the second seat unit 20 to separate from the first seat unit 10. Therefore, the disadvantages associated with the aforesaid conventional coupling devices can be avoided.

In addition, the strength of the magnetic attraction between the first and second members 31, 32 of the first magnetic unit 30 and between the third and fourth members 41, 42 of the second magnetic unit 40 may be properly set to achieve safety release of the mudguard 2. When the mudguard 1 is pushed by a force that is generated from an object (e. g. , clothing of a cyclist) being caught in the magnetic coupling device, and that is larger than the strength of the magnetic attraction between the first and second members 31, 32 of the first magnetic unit 30 and between the third and fourth members 41, 42 of the second magnetic unit 40, the mudguard 1 can be automatically separated from the front fork 2 without operation of the releasing member 50 from the linked state to the released state.

Furthermore, the configuration of multiple magnetic units (i.e., the first and second magnetic units 30, 40) can effectively prevent rotation of the mudguard 1 relative to the front fork 2, and can enhance the structural strength of the magnetic coupling device against a force that is exerted laterally to the magnetic coupling device.

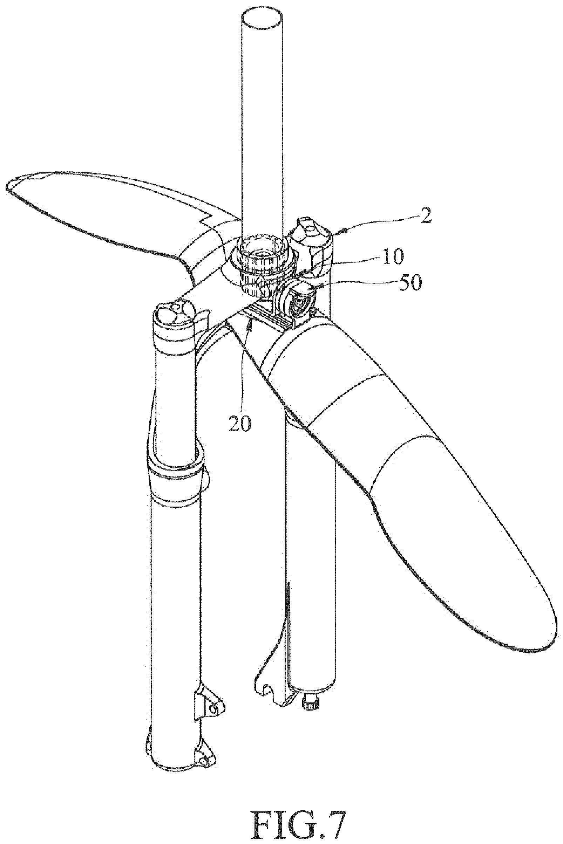

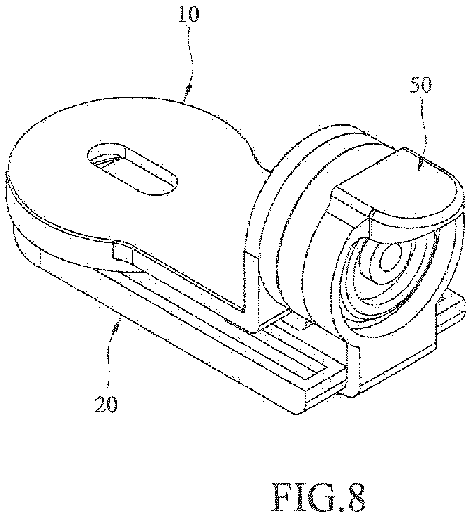

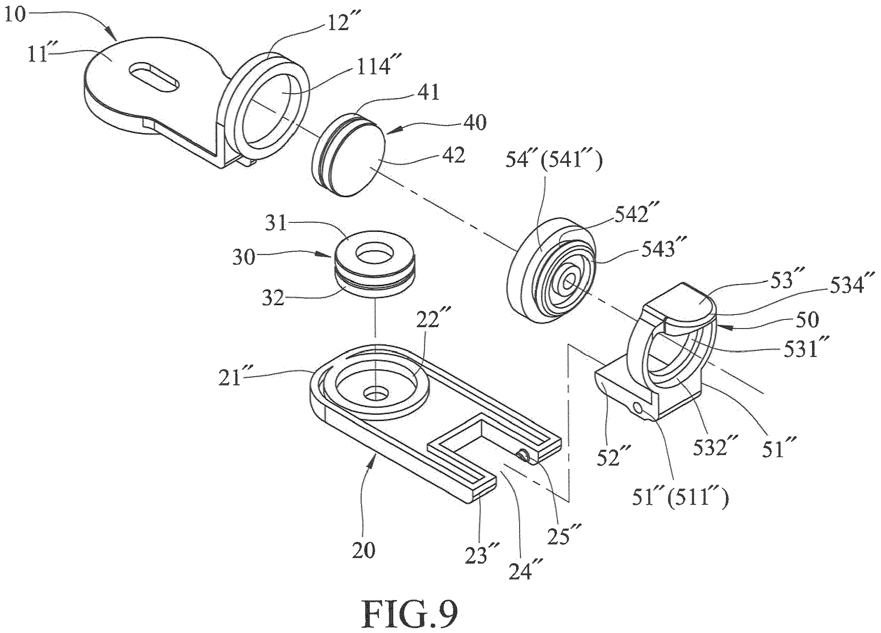

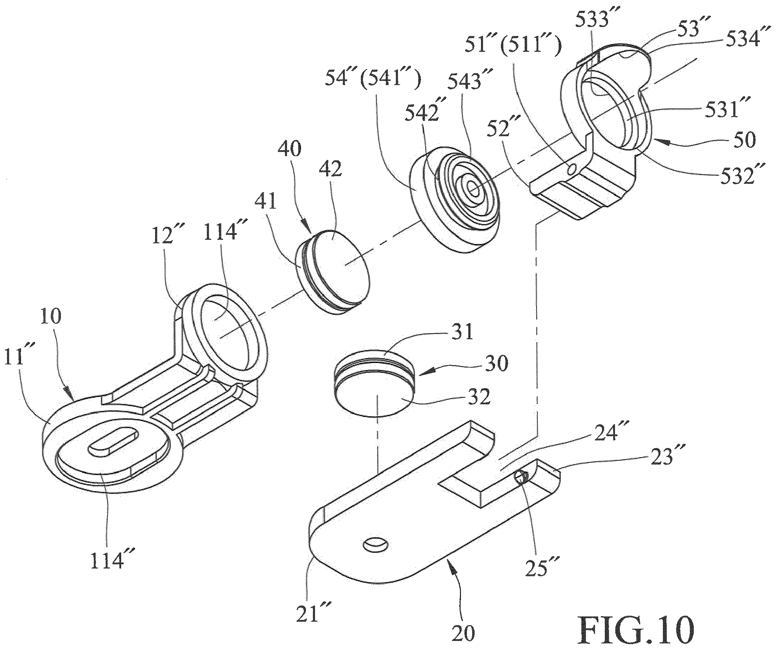

Referring to Figures 7 to 10, a second embodiment of the magnetic coupling device according to the disclosure is suitable for a front fork 2 that has a bottom fastening hole.

In this embodiment, the first seat unit 10 has a horizontal seat body 11", and a vertical seat body 12" that is perpendicularly connected to the horizontal seat body 11" to form an L-shaped structure. The first seat unit 10 further has two upper holes 114" respectively formed in the horizontal and vertical seat bodies 11", 12", and respectively retaining the first member 31 of the first magnetic unit 30, and the third member 41 of the second magnetic unit 40 therein.

The second seat unit 20 has a first end portion 21" formed with a lower hole 22", a second end portion 23" opposite to the first end portion 21" and formed with a recess 24", and opposite pivot rods 25" protruding from the second end portion 23" into the recess 24". The lower hole 22" retains the second member 32 of the first magnetic unit 30 therein.

The releasing member 50 has two pivot portions 51", an arm portion 52", a handle portion 53", and a coupling seat 54". The pivot portions 51" are rotatably connected to the second seat unit 20, and each of the pivot portions 51" has a pivot hole 511" being engaged with a respective one of the pivot rods 25", such that the releasing member 50 is pivotable relative to the second seat unit 20. The arm portion 52" is connected to the pivot portions 51". The handle portion 53" extends perpendicularly from an end of the pivot portions 51" that is opposite to the arm portion 52". The pivot portions 51", the arm portion 52" and the handle portion 53" cooperatively form an L-shaped structure. The handle portion 53" has a main segment defining a through hole 531", and a receiving hole 532" that is registered with, larger than and in spatial communication with the through hole 531". The handle portion 53" further has a handle segment 534" extending from the main segment.

The coupling seat 54" of the releasing member 50 has a retaining portion 541", a neck portion 542", and an expansion portion 543". The retaining portion 541" retains the fourth member 42 of the second magnetic unit 40 therein. The neck portion 542" is connected to the retaining portion 541", and loosely engages the through hole 531" of the handle portion 53". The expansion portion 543" projects outwardly from an end of the neck portion 542" that is opposite to the retaining portion 541", and loosely engages the receiving hole 532". The retaining portion 541" abuts against the main segment of the handle portion 53".

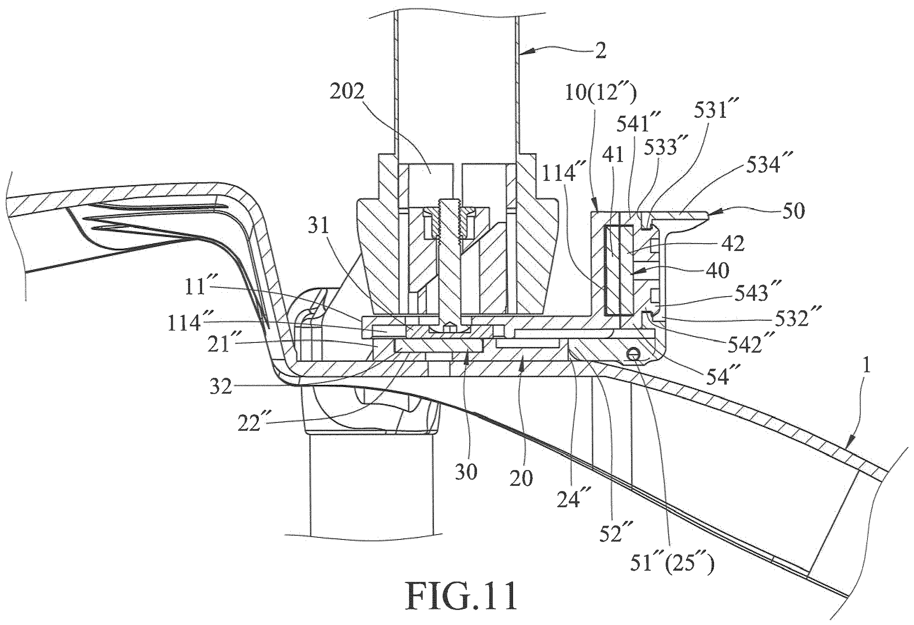

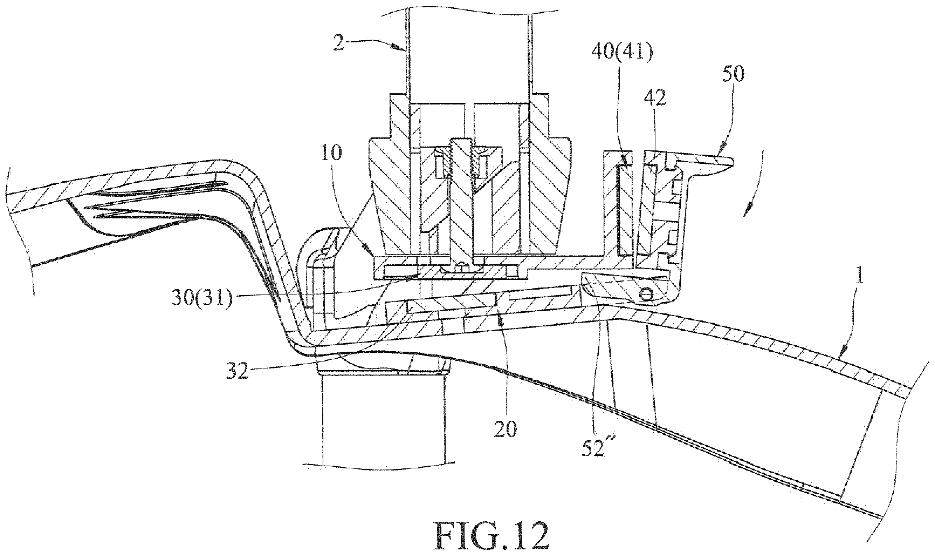

Referring to Figure 11, when the releasing member 50 is in the linked state, the arm portion 52" is received in the recess 24" of the second seat unit 20. Referring to Figure 12, when the releasing member 50 is in the released state, the arm portion 52" projects out from the second seat unit 20 to drive the separation of the second seat unit 20 from the first seat unit 10 with the second and fourth members 32, 42 being respectively separated from the first and third members 31, 41, thereby separating the mudguard 1 from the front fork 2. The second embodiment has the same advantages as those of the previous embodiment.

In addition, by virtue of the loose engagement of the neck portion 542" and the through hole 531", the fourth member 42 of the second magnetic unit 40 can be automatically adjusted to be precisely aligned with the third member 41 of the second magnetic unit 40 so as to maintain the magnetic attraction between the third and fourth members 41, 42 of the magnetic unit 40.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A magnetic coupling device adapted to couple a mudguard (1) to a frame of a vehicle, said magnetic coupling device **characterized by**:
a first seat unit (10) adapted to be connected to the frame;
a second seat unit (20) adapted to be connected to the mudguard (1);
a first magnetic unit (30) including
a first member (31) that is disposed in said first seat unit (10), and
a second member (32) that is disposed in said second seat unit (20); and
a releasing member (50) connected between said first seat unit (10) and said second seat unit (20), and being operable between a linked state, where said second seat unit (20) is coupled to said first seat unit (10) with said second member being magnetically connected to said first member (31), and a released state, where said second seat unit (20) is away from said first seat unit (10) with said second member (32) being separated from said first member (31).

2. The magnetic coupling device as claimed in claim 1, **characterized in that**:
said releasing member (50) is pivotally connected to one of said first and second seat units (10, 20); and
when said releasing member (50) is converted from the linked state to the released state, said releasing member (50) is pivoted to drive said second seat unit (20) to be separated from said first seat unit (10).

3. The magnetic coupling device as claimed in any one of the preceding claims, further **characterized by** a second magnetic unit (40), said second magnetic unit including a third member (41) that is disposed in said first seat unit (10), and a fourth member (42) that is disposed in said second seat unit (20), and that is magnetically connected to said third member (41) when the releasing member (50) is in the linked state.

4. The magnetic coupling device as claimed in claim 3, **characterized in that**:
said first seat unit (10) has
a first seat (11) having
a first base plate (111) that is formed with two upper holes (114) respectively retaining said first member (31) of said first magnetic unit (30) and said third member (41) of said second magnetic unit (40) therein, and two pivot holes (116) disposed between said upper holes (114),
a first clamp plate (112) that is connected to said first base plate (111), and that cooperates with said first base plate (111) to form an L-shaped structure, and
two guide rails (115) that are respectively connected to opposite ends of said first base plate (111), and that flank said upper holes (114), and
a second seat (12) having
a second base plate (121),
a second clamp plate (122) that is connected to said second base plate (122), and that cooperates with said second base plate (122) to form an L-shaped structure, and
two guide grooves (125) that are formed in said second base plate (121), and that are engaged respectively with said guide rails (115), such that said first seat (11) is slidable relative to said second seat (12);
said second seat unit (20) is formed with two lower holes (22) respectively retaining said second member (32) of said first magnetic unit (30) and said fourth member (42) of said second magnetic unit (40) therein;
said releasing member (50) has
two pivot rods (51) respectively and rotatably engaging said pivot holes (116) of said first seat (11),
a connecting portion (52) being U-shaped, and interconnecting said pivot rods (51), such that rotation of said pivot rods (51) in said pivot holes (116) results in a pivot action of said connecting portion (52) relative to said first seat (11), and
a handle portion (53) connected to said connecting portion; and
when said releasing member (50) is in the linked state, said connecting portion (52) of said releasing member (50) is clamped between said first seat (11) and said second seat unit (20).

5. The magnetic coupling device as claimed in claim 4, **characterized in that**:
said first base plate (111) of said first seat (11) of said first seat unit (10) has
a first end surface (117) opposite to said upper holes (114), and
a plurality of first non-slip strips (118) disposed on said first end surface (117);
said second base plate (121) of said second seat (12) of said first seat unit (10) has
a second end surface (127) facing said first end surface (117), and
a plurality of second non-slip strips (128) disposed on said second end surface (127), and engaging said first non-slip strips (128) for securing said first seat (11) at a desired position relative to said second seat (12) after sliding movement of said first seat (11) relative to said second seat (12).

6. The magnetic coupling device as claimed in claim 3, **characterized in that**:
said first seat unit (10) has
two upper holes (114) respectively retaining said first member (31) of said first magnetic unit (30) and said third member (41) of said second magnetic unit (40) therein, and
opposite pivot holes (116) disposed between said upper holes (114);
said second seat unit (20) is formed with two lower holes (22) respectively retaining said second member (32) of said first magnetic unit (30) and said fourth member (42) of said second magnetic unit (40) therein;
said releasing member (50) includes
two pivot rods (51) respectively and rotatably engaging said pivot holes (114) of said first seat unit (10),
a connecting portion (52) being U-shaped, and interconnecting said pivot rods (51), such that rotation of said pivot rods (51) in said pivot holes (116) results in a pivot action of said connecting portion (52) relative to said first seat (11), and
a handle portion (53) connected to said connecting portion (52), and projecting outwardly of said second seat unit (20); and
when said releasing member (50) is in the linked state, said connecting portion (52) of said releasing member (50) is clamped between said first seat (11) and said second seat unit (10).

7. The magnetic coupling device as claimed in claim 3, **characterized in that**:
said first seat (10) unit has a horizontal seat body (11"), and a vertical seat body (12") that is connected to said horizontal seat body (11") and that cooperates with said horizontal seat body (11") to form an L-shaped structure;
said first member (31) of said first magnetic unit (30) is disposed in said horizontal seat body (11");
said third member (41) of said second magnetic unit (40) is disposed in said vertical seat body (12");
said releasing member (50) has
two pivot portions (51") rotatably connected to said second seat unit (20) such that said releasingmember (50) is pivotable relative to said second seat unit (20),
an arm portion (52") connected to said pivot portions (51"), and
a handle portion (53") extending transversely from an end of said pivot portions (51") that is opposite to said arm portion (52"), retaining said fourth member (42) of said second magnetic unit (40) therein;
when said releasing member (50) is in the linked state, said arm portion (52") is received in said second seat unit (20); and
when said releasing member (50) is in the released state, said arm portion (52") projects out from said second seat unit (20) to drive the separation of said second seat unit (20) from said first seat unit (10).

8. The magnetic coupling device as claimed in claim 7, **characterized in that**:
said second seat unit (20) has
a first end portion (21") formed with a lower hole (22") that retains said second member (32) of said first magnetic unit (30) therein,
a second end portion (23") formed with a recess (24"), and
opposite pivot rods (25") protruding into said recess (24");
each of said pivot portions (51") of said releasing member (50") has a pivot hole (511") being engaged with a respective one of said pivot rods (25");
said pivot portions (51"), said arm portion (52") and said handle portion (53") cooperatively form an L-shaped structure; and
said arm portion (52") is received in said recess (24") when said releasing member (50) is in the linked state.

9. The magnetic coupling device as claimed in any one of claims 7 and 8, **characterized in that**:
said handle portion (53") of said releasing member (50) has
a main segment defining a through hole (531"), and a receiving hole (532") that is registered with, larger than and in spatial communication with said through hole (531"), and
a handle segment (534") extending from said main segment;
said releasing member (50) further has a coupling seat (54") having
a retaining portion (541") that retains said fourth member (42) of said second magnetic unit (40) therein,
a neck portion (542") that is connected to said retaining portion (541"), and that loosely engages said through hole (531"), and
an expansion portion (543") that projects outwardlyfromanendof saidneckportion (542") opposite to said retaining portion (541"), and that loosely engages said receiving hole (532").
